# EUROPÄISCHE PATENTANMELDUNG

(11) **EP 2 158 964 A1**
(43) Veröffentlichungstag der Anmeldung: **03.03.2010**
(21) Anmeldenummer: 09010797.0
(22) Anmeldetag: 24.08.2009
(51) Int. Cl.: B01J 23/04, B01J 37/02, C03C 17/10

(54) **Thermokatalytische Beschichtung**

(30) Priorität: 26.08.2008 DE 102008039684
(71) Anmelder: Schott AG, 55122 Mainz (DE)
(72) Erfinder: Hack, Hrabanus, Dr., 55126 Mainz (DE); Henze, Inka, Dr., 55268 Nieder-Olm (DE); Schmidbauer, Wolfgang, Dr., 55126 Mainz (DE); Weber, Gerhard, 55234 Bechenheim (DE)

(57) **Zusammenfassung**

Die vorliegende Erfindung betrifft eine thermokatalytisch wirksame Beschichtung, ein Substrat, das zumindest teilweise eine thermokatalytisch aktive Beschichtung aufweist, sowie ein Verfahren zur Herstellung einer thermokatalytisch aktiven Substrat-Oberfläche und seine Verwendung, wobei die Beschichtung zumindest eine Lithiumverbindung enthält.

## Beschreibung

Die vorliegende Erfindung betrifft eine thermokatalytisch wirksame Beschichtung, ein Substrat, das zumindest teilweise eine thermokatalytisch aktive Beschichtung aufweist, sowie ein Verfahren zur Herstellung einer thermokatalytisch aktiven Substrat-Oberfläche, und seine Verwendung.
Thermokatalytische Schichten und Oberflächen sind allgemein bekannt und werden zur Autoabgasreinigung oder zur Unterstützung der Selbstreinigung in Backöfen eingesetzt. In der Regel handelt es sich um Edelmetallbeschichtungen, wie Platin, oder Emailbeschichtungen die Übergangsmetalle enthalten. Backöfen umfassen einen verschließbaren und durch eine Backofenmuffel begrenzten Garraum. Beim Gebrauch werden die Seitenwände dieses Garraums sowie die Sichtscheibe häufig beispielsweise durch Fettspritzer und Bratensäfte verschmutzt. Da diese Verschmutzungen meist nicht zu vermeiden sind, wurden bereits vielfältige Versuche unternommen, eine Reinigung des Garraums zu erleichtern. Allgemein unterscheidet man dabei zwischen katalytischer und pyrolytischer Reinigung.
Bei der pyrolytischen Reinigung von Backöfen werden extra dafür vorgesehene Heizelemente aktiviert, die dafür sorgen, dass bei Temperaturen von 500°C in etwa 2h die Verschmutzungen vollständig verbrannt werden. Diese pyrolytische Reinigung ist wegen der hohen anzuwendenden Temperaturen aufwändig und aufgrund der immer weiter steigenden Energiekosten teuer.
Ähnlich aufwändig gestaltet sich die Reinigung von Sichtscheiben von Brennkammern, wie beispielsweise Kaminöfen. Auch hier ist die Reinigung der Sichtscheiben derzeit nur mit pyrolytischen Methoden machbar. Da jedoch die Kaminofenbauer aus Effizienz- und Sicherheitsgründen heiße Temperaturen an den Sichtscheiben zu vermeiden suchen, wird in der Regel die zur pyrolytischen Reinigung notwendigen Temperatur ab 500°C gar nicht oder zumindest nicht flächig erreicht.
Bei einer katalytischen Reinigung erfolgt die Zersetzung und Oxidation bzw. die Verbrennung von Verschmutzungen und gasförmigen Abgasen durch Zuhilfenahme katalytisch bzw. oxidativ wirkender Mittel bereits bei erniedrigten Temperaturen, d.h. Temperaturen deutlich unterhalb 500°C. Deshalb sind vom Kostenstandpunkt her gesehen, Katalyse-Systeme den Pyrolysesystemen vorzuziehen. Bei katalytisch wirkenden Reinigungssystemen wird die zu reinigende Fläche in der Regel mit einer katalytische aktiven Beschichtung versehen.

Katalytische Schichten in Backöfen sind als Beschichtungen der Backofenmuffel bekannt. In der DE 101 50 825 A1 ist eine hochporöse Beschichtung beschrieben, die aus porösen Partikeln und einer Bindermatrix besteht. Die Aufgabe dieser dicken Beschichtung ist es, die Fette in der Schicht aufzuspreiten und aufzusaugen. Die katalytische Zersetzung erfolgt an Übergangsmetall-Partikeln und kann schon bei Temperaturen <300°C starten. Diese im Stand der Technik beschriebenen Beschichtungen sind nicht transparent. Aus diesem Grund war bisher die Backofensichtscheibe von der Beschichtung mit selbstreinigenden, katalytische aktiven Beschichtungen ausgenommen, so dass die Backofenscheibe weiterhin mit abrasiven Mitteln oder anderen chemischen Reinigungsmitteln gereinigt werden musste.

In der US 7,297,656 B2 werden katalytische Schichten beschrieben, die Dieselruß abbauen. Die Beschichtung besteht aus dotierten Platinaten. In der Beschreibung werden Dotierungen der Platinate mit Lithium beschrieben, bei denen die Starttemperatur der katalytischen Reaktion des Platins von 392°C auf 366°C herabgesetzt wird. In diesem Patent ist das Vorliegen von Platin essentiell. Für den Fachmann ist es nicht nahe liegend, dass Schichten mit Lithium ohne Platin eine herausragende Wirkung aufweisen können.

Auch in der EP 0645 173 B1 wird ein Katalysator aus einer Kombination von Lithium und Platin oder Palladium beschrieben. Das Lithium soll Vergiftungsreaktionen des Platins oder Palladiums verhindern. Lithium wird in einem Al₂O₃-Träger in einem möglichst festen Verbund hergestellt, auf das dann die Katalysatoren Platin oder Palladium sowie weitere Metallionen aufgebracht werden. Diese Art von Katalysator wird zur Abgasreinigung eingesetzt. Auch hier ist dem Fachmann nicht ersichtlich, dass Lithium ohne Platin oder dem restlichen Verbund aus den beschriebenen Trägermaterialien wirksam sein wird.

Alkalimetalle, bevorzugt Kalium wird in der EP 1 412 060 B1 im Einsatz bei Ottomotoren beschrieben. Hier werden Trägermaterialien mit wässrigen Kaliumlösungen getränkt. Bei diesem Patent ist nicht davon auszugehen, dass transparente Produkte möglich sein werden. Auch ist in der Beschreibung angegeben, dass die Katalysewirkung vor allen Dingen aus dem Redoxpotential der Trägermaterialien erhalten wird, wobei durch die Alkalien und hier vor allen Dingen Kalium der Effekt noch weiter verbessert wird. Lithium als alleinig wirksame Komponente wird nicht beschrieben.

Ein weiterer Filter für Dieselruß ist der EP 0 105 113 B1 zu entnehmen. In dem Patent wird als ein Ausführungsbeispiel eine wässrige LiOH Lösung über einen Filter gegossen. Die Zündtemperatur liegt bei 467°C. Aufgrund der in der Patentschrift offenbarten hohen Zündtemperatur ist nicht davon auszugehen, dass der gewählte Ansatz für die vorliegende Erfindung genutzt werden kann. Darüber hinaus ist LiOH sehr alkalisch und aggressiv und greift die meisten Substratmaterialien, wie z.B. Glas, Glaskeramik, Metall und einige Kunststoffe korrosiv an.

Katalytische Schichten werden auch zur Desodorierung eingesetzt.

In der EP 1 165 153 B1 werden silikatische Schichten beschrieben, deren katalytische Wirkung durch die Zugabe von Übergangsmetallpartikeln erzielt wird. Wahlweise wird in der Beschreibung die Zugabe von glasbildenden Elementen beschrieben, bei denen unter anderem auch Lithium erwähnt wird. Da bekannt ist, dass Lithium enthaltende Gläser ohne eine entsprechend ausgerüstete Oberfläche keine katalytische Aktivität haben, ist es nicht nahe liegend, dass das Lithium hier katalytisch wirksam ist.

Der Einsatz von Edelmetallen ist kostenintensiv und hat genauso wie die Beschichtungen der Übergangsmetallverbindungen oft den Nachteil, dass die Schichten eine Eigenfarbe aufweisen. Zudem werden oft Materialien mit sehr großen Oberflächen benötigt, um eine ausreichende Abbaureaktionsgeschwindigkeit zu erhalten.
Es besteht daher ein Bedarf an beständigeren und haltbaren, transparenten, zur Selbstreinigung befähigten Oberflächen. Diese sind vor allem in Brennkammern, wie beispielsweise Kaminöfen, oder in oder an Koch-, Brat-, Back und Grillvorrichtungen sowie in Bauteilen zur Abgasreinigung, wie beispielsweise geruchsreduzierenden Bauteilen von Vorteil.

Es ist somit Aufgabe der Erfindung eine thermokatalytische Beschichtung bereitzustellen, die schon bei niedrigen Temperaturen, bevorzugt <350°C eine ausreichende Abbaugeschwindigkeit aufweist und sowohl dünn ist, als auch keine Eigenfarbe aufweist. Darüber hinaus ist es Aufgabe der Erfindung nur Li-Precursoren für die Beschichtung einzusetzen, die sich neutral zum Substrat verhalten und die Oberflächen nicht korrosiv angreifen, das heißt einem pH-Wert ≤11 besitzen.
Es ist eine weitere Aufgabe der Erfindung, ein Substrat bereitzustellen, das zumindest teilweise eine thermokatalytisch aktive Oberfläche aufweist, an der eine katalytische Verbrennung von Ruß und anderen organischen oder oxidierbaren Verbindungen bei deutlich niedrigeren Temperaturen erreicht werden kann als dies mit bisher bekannten Substraten möglich ist.

Es ist eine weitere Aufgabe der Erfindung, ein Verfahren zur Herstellung eines solchen Substrats mit einer thermokatalytischen Beschichtung zu beschreiben.

Es hat sich überraschenderweise gezeigt, dass durch Verwendung einer Beschichtung, die zumindest eine Lithiumverbindung aufweist, die Temperatur, bei der eine katalytische organische Zersetzungsreaktion wie z.B. der Russverbrennung an der thermokatalytischen Beschichtung, oder bei der selbstreinigenden Eigenschaft von Lebensmittelverschmutzungen, d.h. von Kohlenwasserstoffverbindungen, wie Kohlenhydraten, Eiweißen, Fetten, etc. erfolgt, deutlich gesenkt werden kann. Darüber hinaus wurde überraschend eine katalytische Wirkung bei der Oxidation von Kohlenmonoxid im Abgasstrom nachgewiesen.

Erfindungsgemäß wird die Aufgabe dadurch gelöst, dass die erfindungsgemäße Beschichtung zumindest eine Lithiumverbindung in einer Menge enthält, die ≥ 2 Gew.-% an Lithiumionen, bezogen auf das Gesamtgewicht der Beschichtung entspricht.

Die Aufgabe wird ferner durch ein Verfahren zur Herstellung eines Substrats durch Bereitstellen einer Beschichtungsmasse, Aufbringen der Beschichtungsmasse auf ein Substrat und Trocknen des beschichteten Substrats gelöst.

Der Begriff Lithiumverbindung, wie er hier verwendet wird, schließt alle ionischen Verbindungen mit einem pH-Wert ≤11 ein, die zumindest ein Lithiumion aufweisen. Eingeschlossen sind dabei neben den bekannten anorganischen Lithiumsalzen, wie beispielsweise Lithiumphosphat, Lithiumnitrat, Lithiumhalogenide und Lithiumsulfat, auch organische Lithium enthaltende Verbindungen, wie beispielsweise Lithiumacetat, Lithiumcitrattetrahydrat, Lithiumpropionat und Lithium-Derivate der Carbonsäuren, sowie Mischoxide, die Lithium enthalten und alle Lithiumionen enthaltenen Verbindungen, die z.B. bei einer thermischen Zersetzung von Lithiumorganylen entstehen oder durch die reaktive Umsetzung von metallischem Lithium.

Bevorzugt ist die Beschichtung bis auf unvermeidliche Verunreinigungen, wie sie beispielsweise in den verwendeten Rohstoffen vorkommen oder sich herstellungsbedingt bilden, frei von Li₂O und/oder LiOH. Li₂O setzt sich in feuchter Atmosphäre leicht zu LiOH um, woraus eine sehr alkalische Oberfläche entsteht, welche wiederum das Substrat angreifen kann. Üblicherweise muss Li₂O deshalb in sauberer und trockner Atmosphäre gehalten werden.

Der pH-Wert bezieht sich erfindungsgemäß auf die in Sicherheitsdatenblättern von Merck Chemicals (Firma Merck KGaA, Darmstadt, Deutschland) angegebenen Werte, und ist im allgemeinen auf 50 g/L Wasser bei 20°C bezogen. Bei zu geringen Löslichkeiten der Substanzen werden die pH-Werte aber auch für geringeren Mengen, wie beispielsweise 5g/L Wasser oder höheren Temperaturen angegeben.

Die Lithiumverbindung ist im wesentlichen der thermokatalytisch aktive Teil der Beschichtung.

Thermokatalyse bzw. thermokatalytisch bedeutet hier, dass die Aktivierungsenergie einer Reaktion mittels des erfindungsgemäßen Formkörpers derart herabgesetzt wird, dass die Reaktionstemperatur erniedrigt wird.
Die Lithiumverbindung kann aber auch eine amorph-anorganische und/oder eine kristallin-anorganische Verbindung, insbesondere eine Einzel- und/oder Mehrkomponentenverbindung der Oxide und/oder Nitride und/oder Carbide und/oder Fluoride des Si, B, Ge, Bi, Al, Na, Li, K, P, Mg, Ca, Sr, Ba, Mn, Ni, Co, Cr, V, Sn, Zn, In, Fe, Ti, Zr, Hf, Y, Nb, Ce, Gd, La, Sm, Ta, W sein.

Es versteht sich, dass die Beschichtung Verunreinigungen und Dotierungen mit den Elementen, wie C, Si, B, Ge, Bi, Al, Na, K, P, Mg, Ca, Sr, Ba, Mn, Ni, Co, Cr, V, Sn, Zn, In, Fe, Ti, Zr, Hf, Y, Nb, Ce, Gd, La, Sm, Ta, W, oder aus Edelmetallen, wie Pt, Rh, Pd, Ru, Au, Ag enthalten kann. Dabei werden Dotierungen bevorzugt in Größenordungen von kleiner 2 Gew.-% zugegeben.

Die Lithiumverbindung kann erfindungsgemäß sowohl ohne eine bindende Matrix als auch in einer Matrix eingebunden vorliegen. So ist es möglich Lithiumverbindungen in Lösung zu bringen und auf ein Substrat zu applizieren. Im Rahmen der Erfindung können alle handelsüblichen Lösungsmittel eingesetzt werden, wie beispielsweise Wasser, Alkohole, Ketone, Acetone, Acetylacetonat, Essigsäureethylester, mehrwertige Alkohole, sowie Mischungen davon.

Eine bevorzugte Ausführungsform ist es, eine Beschichtung aus den erfindungsgemäßen Lithiumverbindungen und einer bindenden Matrix herzustellen. Eine bindende Matrix kann sowohl aus einer anorganischen wie auch aus einer organischen Matrix oder Mischungen daraus bestehen.

Unter einer anorganischen Matrix sind folgende Verbindungen zu verstehen: Gläser und Glaslote, Sol-Gel-Matrices. Bevorzugt beinhalten diese anorganischen Matrices Siliziumoxid, Titanoxid, Zirkonoxid, Aluminiumoxid, Ceroxid, Eisenoxid, Zinnoxid, Boroxid. Die Matrix kann erfindungsgemäß auch aus einer Mischung der genannten Matrixkomponenten bestehen.

Erfindungsgemäß wird eine anorganische Sol-Gel-Matrix bevorzugt. Die Herstellung derartiger Sol-Gel-Systeme sind dem Fachmann bekannt. Erfindungsgemäß sind solche Sol-Gel-Schichten geeignet, die nach der Trocknung bzw. nach der Temperung einen dünnen, transparenten Gel-Film bzw. -Schicht ausbilden.

Die Sol-Gel-Matrix wird in Wasser, einem organischen Lösungsmittel oder einem wässrig/organischen Lösungsmittelgemisch, wie beispielsweise einem Gemisch aus Wasser und wenigstens einem Lösungsmittel, ausgewählt aus der Gruppe der Alkohole, mehrwertigen Alkohole, Acetone, Ketone, Acetylaceton, Essigsäureethylester, 2-Butoxy-Ethanol, 1-Propanol, 2-Propanol, Methanol, Ethanol und weitere dem Fachmann bekannte Lösungsmittel durch saure oder basische katalysierte Hydrolyse hergestellt. Diese Sole sind klare stabile Lösungen mit einem Feststoffgehalt in der Regel im Bereich von etwa 1 bis etwa 40 Gew.-%. Die daraus gewonnenen Sol-Gel-Schichten bestehen vorzugsweise aus einem Netzwerk von Halbmetall- oder Metalloxiden, wie beispielsweise Siliziumoxid, Germaniumoxid, Titanoxid, Zirkonoxid, Aluminiumoxid, Ceroxid, Boroxid, Eisenoxid, Zinnoxid oder deren Mischungen.

Unter einer organischen Matrix wird im Rahmen der Erfindung eine organisch basierte Verbindung verstanden, die aus Wachsen, Polymeren, Tensiden, Carbon- und Fettsäuren, Ölen, Harzen, Silikonharz, oder Mischungen daraus aufgebaut sein kann. Diese hat den Zweck die Lithiumverbindung auf dem Substrat zu fixieren. Gemäß der Erfindung wird unter Polymer kohlenstoffenthaltende Makromoleküle verstanden. Bevorzugt sind Silikone und Silikonharze, sowie thermisch rückstandfrei zersetzende Polymere, wie beispielsweise Polyvinylalkohol, Polyvinylpyrolydon, Polyethylenglycol oder Cellulose.
In einer weiteren Ausgestaltung der Erfindung ist eine Mischung bevorzugt, die zumindest ein Verdickungsmittel bevorzugt ausgewählt aus der Gruppe bestehend aus Xanthangum, Glycerin, Polyethylenglycol, Polyvinylalkohol, Polyvinylpyrrolidon, sowie Cellulose und den Cellulosederivaten und Mischungen davon enthält.
Es hat sich gezeigt, dass die Verwendung der oben genannten Verdickungsmittel besonders effektiv für die Herstellung von Pasten für die Herstellung von thermokatalytischen Schichten ist.

Diese Substanzen haben den Vorteil, dass sie vom Endanwender leicht zu handhaben und einfach mit handelsüblichen Tüchern auf die Substratoberfläche aufzureiben sind. Die Verdickungsmittel sind ungiftig und zersetzen sich im Gebrauch rückstandsfrei.

Es versteht sich, dass die vorstehend genannten und nachstehend noch zu erläuternden Merkmale nicht nur in der jeweils angegebenen Kombination, sondern auch in anderen Kombinationen oder in Alleinstellung anwendbar sind, ohne den Rahmen der vorliegenden Erfindung zu verlassen.

Die Viskosität der Beschichtung deckt den flüssigen bis pastösen Bereich ab, d.h. eine Viskosität von 0,5mPa*s bis 10⁶mPa*s. Die gewünschten Viskositäten können durch geeignete Wahl des Lösungsmittels, Verdickungsmittels oder der Matrix und durch Zusatz von Partikeln oder unlöslichen Komponenten erzielt werden. Besonders bevorzugt sind hier Partikel mit Partikelgrößen von 2 bis 200nm. Neben der Möglichkeit die Partikel zum Eindicken der Beschichtungslösung zu verwenden, ist es ebenso möglich der Beschichtungslösung Partikel mit funktionellen Eigenschaften, wie reflektierende Eigenschaften, z.B. im Infrarot- oder Ultraviolettbereich, bei definierte Wellenlängen, oder färbenden Eigenschaften, oder bioziden Eigenschaften oder die Thermokatalyse weiter verstärkende Partikel beizugeben.

Erfindungsgemäß findet die thermokatalytische Reaktion bei Temperaturen von 100°C bis 600°C, bevorzugt bei 200°C bis 400°C, besonders bevorzugt bei 300°C bis 350°C statt.

Um einen verbesserten Einsatz von thermokatalytisch selbstreinigenden Oberflächen zu ermöglichen, ist ein Substrat mit einer Oberfläche nötig, an der bereits bei geringen Temperaturen eine katalytische Zersetzung abläuft. Ferner muss die Oberfläche so ausgestaltet sein, dass das zyklische Erhitzen nicht zu einer Schädigung des Substrats führt.

Die thermokatalytisch aktive Oberfläche nach der Erfindung kann hierbei auf der gesamten Oberfläche des Substrats oder auf Teilen davon vorliegen und als durchgehende Schicht oder in Form von kleinen verteilten Agglomerationen vorliegen. Es ist dabei dem Fachmann verständlich, dass im Falle des Vorliegens von nicht durchgehenden Schichten die Lithiumkonzentration lediglich punktuell erreicht werden muss.

Das Substrat nach der Erfindung kann aus vielerlei Materialien bestehen, wobei das Material eine thermische Beständigkeit von 350°C aufweisen sollte. Als Substrat können beispielsweise alle Glaskeramiken, wie CERAN^{®}, ROBAX^{®}, ZERODUR^{®}, Spezialgläser, wie Borofloat^{®}, DURAN^{®}, FIOLAX^{®} und weitere Gläser, Keramiken, Metalle und ausgewählte Hochtemperaturkunststoffe gewählt werden. Selbstverständlich kann das Substrat auch veränderte Oberflächen aufweisen, wie beispielsweise Email, Dekore, wärmereflektierende Schichten, Antireflex-Oberflächen, poröse Untergründe, wie Sinterglas- und Sinterglaskeramikschichten, Haftvermittlerschichten und Barriereschichten. Diese können dabei zumindest teilweise ein- oder beidseitig, gegebenenfalls auch mehrlagig aufgebracht werden. Selbstverständlich können auch beliebige Farben, Bilder und Strukturen auf dem zu beschichtenden Teil vorliegen.

Das Substrat kann ferner verschiedene Formen haben. Es kann z.B. in Form von flachen oder dreidimensional geformten Platten, porösen Filtern, Fasern, geformten Gegenständen aber auch in partikulärer Form, z.B. in Pulverform vorliegen. Das beschichtete Bauteil bzw. der Gegenstand unterliegt nicht nur hinsichtlich des Materials, sondern auch hinsichtlich der Form im Rahmen der Erfindung keiner Beschränkung, so dass flache, runde, abgerundete, große und kleine Formen eingesetzt werden können.

Die Oberflächen gemäß der Erfindung können porös oder nicht porös strukturiert sein. Bei porösen Oberflächen liegt die Porosität im Bereich von 2-70%, vorzugsweise bei 5-50%.

Die Lithium enthaltende Oberfläche kann ein integraler Bestandteil des Substrats sein oder in Form einer Beschichtung auf dem Substrat vorliegen. Die Lithiumverbindungen können als einfache Salze, aber auch in Form von Mischsalzen vorliegen. Die Lithiumverbindungen können einfach als kristalline oder amorphe Schichten oder Partikel aber auch in Matrices oder in anderen Systemen, wie z.B. Zeolithen eingeschlossen vorliegen. Es muss dabei lediglich sichergestellt sein, dass ein Teil der Lithiumverbindungen an der Oberfläche zugänglich ist. Liegt die thermokatalytisch aktive Oberfläche als Beschichtung vor, kann diese direkt auf das Substrat aufgebracht sein, oder es können zwischen Substrat und Oberfläche weitere ggf. funktionelle Schichten wie z.B. IR-Strahlung-reflektierende Schichten, Haftvermittlerschichten oder Barriereschichten vorliegen, die die Diffusion von Lithium in das Substrat verhindern oder zumindest verlangsamen.

Die thermokatalytisch aktiven Oberflächen gemäß der Erfindung können bei der Herstellung des Substrats direkt entstehen oder durch dem Fachmann bekannte Verfahren auf das Substrat aufgebracht werden. Beispielhafte Verfahren schließen Flüssigbeschichtungsverfahren, wie Sprüh-, Flut-, Gieß- und Tauchverfahren, sowie Rollcoating und Siebdruck unter Verwendung von Lösungen der Lithiumverbindungen, CVD- und PVD-Verfahren ein. Eine weitere Möglichkeit zur Herstellung der erfindungsgemäßen Substrate besteht darin, in dem Substratmaterial vorliegende Lithiumverbindungen oder Lithiumionen durch eine Oberflächenbehandlung wie bspw. Ätzverfahren zugänglich zu machen.

In einer weiteren Ausführungsform werden Lithiumverbindungen ohne Einbindung in eine Matrix vorzugsweise durch eine Wärmebehandlung mit dem Substrat verbunden. Einige der oben genannten Lithiumverbindungen können aufgeschmolzen werden. Bei höheren Temperaturen, d.h. >300°C kann ein lonenaustausch zwischen dem Substrat und Lithium erfolgen. Bevorzugt werden hier lonenaustauschreaktionen an Gläsern, Sintergläsern und Keramiken, bei denen beispielsweise Wasserstoffionen aus dem Substrat durch Lithiumionen ausgetauscht werden. Der Ionenaustausch kann dabei beim Herstellprozess der Gläser, wie beispielsweise im Floatprozess oder bei der Glasformgebung, oder in einem nachgelagerten Wärmeprozess erfolgen. Bevorzugt wird hierbei der Vorspannprozess, da so kein zusätzlicher Prozessschritt notwendig ist und die benötigte Energie effizient genutzt wird. Weniger bevorzugt ist der Ionenaustausch bei Glaskeramiken, wie er in der DE 10 2006 056 088 A1 beschrieben ist, da die ausgetauschten Lithiumionen im Keramisierungsprozess in die Kristallphase der Glaskeramik eingebaut werden und für katalytische Reaktionen nicht mehr ausreichend zur Verfügung stehen.

In einem bevorzugten Verfahren wird die Oberfläche durch Aufbringen der Lithiumverbindung in Form einer Paste erzeugt. Eine Paste hat dabei den Vorteil, dass diese besonders gut zu handhaben ist und ggf. sogar von einem Endanwender im Haushalt auf ein gewünschtes Substrat aufgebracht werden kann, z.B. um ein bereits verschmutztes Substrat zu reinigen, um ein Substrat mit einer thermokatalytischen Funktionalität zu versehen oder um eine bereits bestehende thermokatalytische Funktionalität aufzufrischen.

In einer weiteren bevorzugten Ausführungsform erfolgt die Beschichtung in Form eines Sol-Gel-Verfahrens. Der Vorteil eines Sol-Gel-Verfahrens liegt darin, dass damit ein bevorzugt sehr poröses und damit katalytisch sehr aktives System hergestellt werden kann. Andere mögliche Beschichtungsformen schließen PVD- und CVD-Verfahren ein.

Ein Substrat, bei dem die thermokatalytisch aktive Oberfläche in Form einer Beschichtung vorliegt, kann z.B. durch Aufbringen einer Beschichtungsmasse oder -lösung auf das Substrat und anschließendem Trocknen bzw. ggf. weiterem Behandeln hergestellt werden. Dabei liegen die Trocknungstemperaturen bei 20°C bis 750°C, vorzugsweise 20°C bis 500°C, besonders bevorzugt bei 20°C bis 450°C. Damit kann ein solches Substrat auf einfache Weise hergestellt werden.

In einer weiteren Ausgestaltung der oben genannten Maßnahme weist die Beschichtung eine Dicke von 1 nm bis 10 µm, bevorzugt von 5 nm bis 350 nm und besonders bevorzugt von 10 nm bis 300 bzw. 200 nm auf.

Durch die Verwendung von Beschichtungen dieser Dicke wird eine langzeitstabile Beschichtung für das Substrat mit thermokatalytischer Aktivität geschaffen, ohne dass übermäßig dicke Schichten aufgetragen werden müssen, die andere, zum Beispiel die ästhetischen Eigenschaften des Substrats beeinträchtigen würden.

In einer weiteren Ausgestaltung der oben genannten Maßnahme ist zwischen dem Substrat und der Beschichtung eine Barriereschicht angeordnet.

Durch das Vorsehen dieser Barriereschicht kann ein Diffundieren von Lithiumionen aus der thermokatalytisch aktiven Oberfläche in das Substrat verhindert werden. Auf diese Weise kann der Gehalt an Lithiumionen und somit die thermokatalytische Aktivität der thermokatalytisch aktiven Oberfläche über lange Zeit beibehalten werden. Ferner kann dadurch auch eine Schädigung des Substrats durch Gase verhindert werden, die während der katalytischen Zersetzung freigesetzt werden. Beispiele hierfür schließen z.B. schwefelhaltige Gase ein, die die Stabilität eines Glassubstrats beeinträchtigen können.

Beispiele für diese Barriereschicht schließen Schichten aus SiO₂, SnO₂, Al2O₃, ZrO₂ und TiO₂ oder Mischungen daraus ein.

In einer weiteren Ausführungsform der Erfindung sind das Substrat und die Oberfläche transparent. Bevorzugterweise sind das Substrat und die Oberfläche farblos.

Auf diese Weise können unter Verwendung des erfindungsgemäßen Substrats durchsichtige, farblose Sichtscheiben hergestellt werden, die sich unter dem Einfluss der beispielsweise in einer Brennkammer auftretenden Wärme selbst reinigen und somit über lange Zeit zuverlässig Einblick erlauben.

Der Begriff Brennkammer umfasst im Rahmen der vorliegenden Erfindung jede Kammer, in der eine Verbrennung oxidierbarer Substanzen, beispielsweise von kohlenstoff- bzw. kohlenwasserstoffhaltigen oder stickstoffhaltigen Substanzen erfolgt. Dies schließt Brennkammern von Verbrennungsmotoren, industriell genutzte Brennkammern, aber auch z.B. offene oder geschlossene Kamine oder Kaminöfen in privaten Haushalten ein. Der Begriff Brennkammer schließt aber auch andere Kammern ein, in denen kohlenstoff- bzw. kohlenwasserstoffhaltige Substanzen einer erhöhten Temperatur ausgesetzt werden, wie z.B. Koch-, Brat- und Grillgeschirr oder Backöfen.

In einer weiteren Ausführungsform der Erfindung weist die Brennkammer eine Sichtscheibe auf, die das erfindungsgemäße Substrat aufweist, wobei die thermokatalytisch aktive Oberfläche auf der der Brennkammer zugewandten Seite der Sichtscheibe angeordnet ist.

Die Verwendung des erfindungsgemäßen Substrates als Sichtscheibe für eine Brennkammer auf eine Weise, dass die Oberfläche an der der Brennkammer zugewandten Seite angeordnet ist, kann ein Verschmutzung der Sichtscheibe effektiv verhindern, was ein häufiges Reinigen der Sichtscheibe unnötig macht und langfristig sicheren Einblick in die Brennkammer ermöglicht.
In einer weiteren Ausführungsform der Erfindung ist an dem Substrat ferner eine die IR-Strahlung reflektierende Schicht angeordnet.
Die IR-Strahlung reflektierende Schicht kann hierbei entweder unterhalb der thermokatalytisch wirksamen Oberfläche oder in dem Falle, in dem das Substrat gegenüber IR-Strahlung transparent ist, auch auf einer der Oberfläche abgewandten Seite des Substrats angeordnet sein. Durch Vorsehen einer solchen Schicht wird die durch thermokatalytisch aktive Oberfläche hindurchtretende IR-Strahlung an der IR-Strahlung reflektierenden Schicht reflektiert und tritt nochmals durch die thermokatalytisch aktive Oberfläche hindurch. Hierdurch wird die Temperatur der thermokatalytisch aktiven Oberfläche erhöht, was die thermokatalytische Zersetzungsaktivität noch deutlich verbessert.

Beispiele für Materialien für die IR-Strahlung reflektierende Schicht schließen SnO₂ und Indium-Zinnoxid, Aluminium-Zinkoxid und Edelmetallschichten ein.

In einer weiteren Ausführungsform der Erfindung weist die Brennkammer einen Abgasauslass auf, wobei das erfindungsgemäße Substrat im Bereich des Abgasauslasses angeordnet ist.

Bei einem solchen Abgasauslass kann es sich beispielsweise um einen Kamin oder Backofen, aber auch um einen Auspuff eines Verbrennungsmotors handeln. Das erfindungsgemäße Substrat kann hierbei in der Brennkammer selbst oder an einer Schnittstelle zwischen Brennkammer und Abgasauslass oder im Abgasauslass angeordnet sein.

Durch Anordnen des erfindungsgemäßen Substrats im Bereich des Abgasauslasses kann beispielsweise die Menge an Ruß, Feinstaub und Gasen, wie beispielsweise Stickoxiden, Kohlenmonoxid, Schwefelgase, die aus der Brennkammer in die Umwelt abgegeben werden, deutlich reduziert werden, was die Umweltfreundlichkeit einer solchen Brennkammer deutlich erhöht.

Durch die Verwendung eines Substrats gemäß der Erfindung in einem Verfahren zur katalytischen Russverbrennung können die Temperaturen, bei denen eine katalytische Russverbrennung abläuft, deutlich gesenkt werden, so dass dieses Verfahren z.B. schon bei einer Temperatur abläuft, wie diese üblicherweise in einer erfindungsgemäßen Brennkammer vorherrscht, so dass ein zusätzliches Aufheizen zur Russverbrennung nicht mehr notwendig ist.

Unter Ruß wird im Rahmen der vorliegenden Erfindung jede partikuläre überwiegend kohlenstoffhaltige Agglomeration von Material verstanden. Dies schließt sowohl Produkte ein, die bei der unvollständigen Verbrennung von kohlenstoff- oder kohlenwasserstoffhaltigen Substanzen entstehen als auch weitere kohlenstoffhaltige Agglomerationen, die z.B. durch eine thermische Behandlung von Kohlenwasserstoffen entstehen. Es ist hierbei dem Fachmann klar, dass Ruß neben Kohlenstoff auch andere Bestandteile wie z.B. unverbrannte Kohlenwasserstoffe, Schwefelverbindungen, Stickstoffverbindungen oder Metalle und Metallverbindungen enthalten kann.

Unter Ruß werden in diesem Zusammenhang auch verkokte Lebensmittelreste, d.h. Lebensmittelreste einer Substanz bzw. eines Substanzgemisches, das bei den Betriebstemperaturen der Koch-, Brat, Back- und Grillvorrichtungen mit der Oberfläche fest verbäckt und gegebenenfalls zumindest teilweise in die Matrix der selbstreinigenden Beschichtung bzw. den darin gegebenenfalls vorliegenden Poren eindringt, verstanden. Dabei kann es sich um bei den Betriebstemperaturen flüssige/fettige Öle, wässrige Phasen (Salz- und Zuckerlösungen) sowie mit diesen vermischten Kohlenhydraten und Eiweißen handeln. Insbesondere handelt es sich bei den Verunreinigungen um Öle, wie beispielsweise Sonnenblumenöl, Sojaöl, Pflanzenfett, Olivenöl, und um Tomatensoße, Käse, Obstsäfte und Milch.
Die erfindungsgemäßen Beschichtungen, Oberflächen und Substrate können in den folgenden Anwendungen eingesetzt werden:
Bauteile in oder an Kaminen und Kaminöfen, bevorzugt Kaminsichtscheiben, Kamininnenraumverkleidungen, Verkleidung des Kaminabgasrohrs, Filter für Kamine;
Bauteile in oder an Heizanlagen, bevorzugt Heizanlageninnenraumverkleidungen, Verkleidung des Abgasrohrs, Filter für Abgasrohr;
Bauteile in oder an Koch-, Brat-, Back und Grillvorrichtungen, bevorzugt Kochflächen, Sichtscheiben, Innenraumverkleidungen, Verkleidung des Abluftrohrs, Filter für Abluftrohr, Friteusen, Mikrowellen, Backbleche, -formen, Backgitter, Grillspieße, industrielle Backautomaten, usw., besonders bevorzugt Bauteile in oder an Pyrolyseöfen; Bauteile an Dunstabzugshauben, bevorzugt Filtermaterialien;
Bauteile an Solaranlagen, bevorzugt Receiverrohre;
Bauteile an Reaktoren, bevorzugt Sichtfenster, Filteranlagen;
Bauteile an oder in Verbrennungsanlagen, wie Müllverbrennungsanlagen, Krematorien;
Bauteile an oder in Verbrennungsmotoren, wie Dieselrussfilter, Autokatalysatoren, diverse Abgasfilter.

Nachfolgend wird die Erfindung anhand von Ausführungsbeispielen näher erläutert.

### Beispiel 1

Es wird eine Beschichtungslösung wie folgt hergestellt. 16,6g Lithiumacetat * 2H₂O, 100mL Ethanol, 20g Acetylaceton, 38g Zirkonpropylat und 50mL Essigsäureethylester werden gemischt und mit Ethanol auf 250mL aufgefüllt.
Gereinigte Glasscheiben werden in einem Tauchprozess mit der Lösung beschichtet. Die Beschichtung erfolgt bei einer Ziehgeschwindigkeit von 40cm/min.

Anschließend werden die Schichten 1 h bei 450°C getrocknet. Das Glas erhält eine abriebfeste, langzeitbeständige, transparente Beschichtung.

### Beispiel 2

Es wird eine Beschichtungslösung wie folgt hergestellt. 10g HNO₃ 1 N, 20g Ethanol, 40mL Lithiumnitrat (10% in Ethanol), 40mL Lithiumchlorid (10% in Ethanol) und 50g SiOₓ-Nanopartikel werden vermischt und mit Ethanol auf 250mL aufgefüllt.
In einem Sprühverfahren werden gereinigte Glaskeramikplatten mit der Lösung beschichtet. Die so erhaltene Beschichtung ist transluzent.

### Beispiel 3

Es wird eine Beschichtung wie folgt hergestellt:
In vorgelegte 40g Ethanol wird 16,6g Tetraethoxysiloxan zugegeben, anschließend werden unter Rühren 12mL Salzsäure (1%-ig) zugetropft. Nach 10 min werden unter weiterem Rühren 7g Lithiumchlorid eingebracht. Die Mischung wird mit Ethanol auf 250mL aufgefüllt.

Ein gereinigtes Glassubstrat wird mit einer Ziehgeschwindigkeit von 20cm/min getaucht. Die so erhaltene Schicht wird bei 650°C für einige Minuten im Vorspannprozess eingebrannt.

### Beispiel 4

Neben Flüssigkeiten können aktive Oberflächen auch durch das Aufreiben von Pasten erhalten werden. Diese Beschichtungen sind definiert für den Einsatz im Haushalt. Der Endanwender kann diese Pasten zur Herstellung oder Auffrischung einer thermokatalytischen Oberfläche einsetzen.

Zur Herstellung der Paste werden 25g Glyzerin, 25g Lithiumhydroxystearat (5% in H₂O), 12,5g Lithiumchlorid (25% in H₂O) und 12,5g Lithiumsulfat (25% in H₂O) mit einem Flügelrührer verrührt. Anschließend wird diese Paste mit einem Tuch dünn auf eine Metallplatte aufgerieben, bis sie nicht mehr zu sehen ist.

### Beispiel 5

Die Beschichtungslösung wird in mehreren Schritten hergestellt.
A) Zunächst wird zur Herstellung von Beschichtungslösungen, mit welchen erfindungsgemäße Beschichtungen hergestellt werden können, ein amorphes Zirkonoxidvorstufenpulver hergestellt. Hierzu werden z.B. zu 424,9g Zirkon(IV)-propylat-Lösung (77%) unter Rühren 100,1g Acetylaceton innerhalb von etwa 25 Minuten zugetropft, wobei deutliche Erwärmung einsetzt. Die zitronengelbe Lösung wird 45min bei Raumtemperatur gerührt und anschließend mit 54,1g Wasser hydrolysiert. Das Lösungsmittel sowie weitere flüchtige Bestandteile werden im Vakuum bei 80°C und 40mbar entfernt. Man erhält ein feines gelbes Vorstufenpulver Nr. 1 mit einem Oxidgehalt von 51wt-%.
   Anschließend wird mit diesem Vorstufenstufenpulver eine 12wt-% wässrige Lösung hergestellt welche als Stammlösung Nr. 1 bezeichnet wird.
   Diese Stammlösung Nr. 1 wird anschließend für 24h bei 165°C in einem Autoklaven behandelt. Es ist eine Stammlösung Nr. 2 mit kolloidal-disperen 5 - 20nm großen nanokristallinen ZrO₂-Partikeln (monokline und tetragonale Phase) entstanden.
B) Es werden 23,5g ZrO₂-Vorstufenpulver (Stammlösung Nr.1) mit 20g Lithiumacetat * 2 H₂0 in 363g Ethanol gelöst.

Eine gereinigte low-E-Glasscheibe wird mit einer Zuggeschwindigkeit von 20cm/min tauchbeschichtet und bei einer Einbrandtemperatur von 450°C verfestigt.

### Beispiel 6

Die Beschichtungslösung wird in mehreren Schritten hergestellt.

Es werden 10,5g ZrO₂-Vorstufenpulver (Stammlösung Nr.1 aus Beispiel 5A) mit 45g ZrO₂ Stammlösung Nr. 2 (Beispiel 5A) und mit 8,3g Lithiumchlorid in 150g Ethanol gelöst.

Mit einer Zuggeschwindigkeit von 30cm/min im Tauchbeschichtungsverfahren und einer Einbrandtemperatur von 350°C können erfindungsgemäße transparente nanokristalline Schichten hergestellt werden.

### Beispiel 7

Die in Beispiel 1 beschriebene Beschichtungslösung wird auf einen stark poröses Substrat aufgebracht. Das Substrat wird während des Keramisierungsprozess erzeugt. Hierbei wird Grünglaspulver mit Siebdruck auf ein Grünglassubstrat aufgebracht. Anschließend wird die poröse Schicht im Keramisierungsprozess umgewandelt und gesintert. Die so erhaltene Oberfläche ist hochporös, weiß und sehr kratzfest.

Das Substrat wird in die in Beispiel 1 beschriebene Lösung getaucht und getrocknet. Die Oberfläche ist auch nach der Beschichtung mit der Lösung noch rein weiß.

### Beispiel 8

Die in Beispiel 1 beschriebene Beschichtungslösung wurde mit 30Gew-% Partikeln gemischt.
Die Partikel wurden dergestalt hergestellt, dass zuerst zwei Lösungen hergestellt wurden. Dafür wurden 20,4 g Lithiumacetat * 2 H₂O in 20g Essigsäure und 100g Ethanol gemischt (Lösung A). Für die zweite Lösung wurden 49,2g Aluminiumsek-butylat in 50g Isopropanol gemischt (Lösung B). Anschließend wurde Lösung A unter Rühren in Lösung B gegeben und mit Ethanol auf 250ml aufgefüllt. Nach 2 h gelierte das Material weiß aus und wurde anschließend in drei Schritten bei 100 °C für 16 h getrocknet, bei 400 °C für 3 h und 700 °C für 3 h getempert. Die Gel wurde mit einem Mörser zerkleinert, so dass feine Partikel entstanden.
Die Beschichtungslösung wurde auf ein poröses keramisches Substrat, wie es üblicherweise für die Abgasbehandlung eingesetzt wird, aufgebracht, getrocknet und bei 600°C für 2h eingebrannt.

### Vergleichsbeispiel 1

Es wird eine Beschichtungslösung wie folgt hergestellt. Zunächst werden 50g HNO₃ 1 N, 40g Ethanol, 9g Tetramethylorthosilikat und 60g Nanopartikel gemischt, mit Ethanol auf 1 L aufgefüllt und unter Rühren homogenisiert. Anschließend wird in 500mL der beschriebenen Lösung unter Rühren 10,6g Cobaltnitrat (Co(NO₃)₂ * 6H₂O eingerührt.

Die Beschichtung wird im Tauchverfahren auf Glaskeramikproben aufgezogen und bei 450°C eingebrannt.

### Vergleichsbeispiel 2

Es wird eine Beschichtungslösung wie folgt hergestellt. 13,2g Nickelchlorid *6H₂O werden in 70g Ethanol gelöst. Anschließend werden 20,8g Tetramethylorthosilikat, 1g HCl und 50g Ethanol unter Rühren in die Lösung gegeben und die Mischung mit Ethanol auf 250mL aufgefüllt.

Die Beschichtung wird im Tauchverfahren auf Glaskeramikproben aufgezogen und bei 450°C eingebrannt.

### Test

Die unterschiedlichen Beschichtungen werden visuell untersucht und deren Transparenz qualitativ bewertet. Beurteilung der katalytischen Aktivität kann entweder mit Ruß oder mit Öl erfolgen.

Zur Beurteilung des Russabbaus werden unterschiedliche Verschmutzungen auf den Beschichtungen abgeschieden. Entweder werden die beschichteten Substrate mit Kerzenruß berußt oder eine Russdispersion oder eine Mischung aus Ruß und Kolophonium wird auf das Substrat aufgesprüht. Zur Herstellung der Russdispersion wird eine 10%-ige Russdispersion hergestellt aus Degussa Printex U und Ethanol. Die Mischung aus Ruß und Kolophonium wird aus einer 10%-igen Russdispersion, wie oben beschrieben, und einer 10%-igen Kolophonium-Lösung in Ethanol im Verhältnis 1:1 hergestellt.

Nach der Trocknung der Verschmutzung werden die Proben anschließend bei Temperaturen von 100 bis 550°C getempert. Bevorzugt wird im Test mit einer schrittweisen Erhöhung der Temperatur um 50°C der Bereich von 300-550°C mit einer Haltezeit von 1 h geprüft. Nach jeder Temperaturbelastung und Abkühlung der Probe wird diese visuell bewertet. Transparente Substrate werden zusätzlich noch in einem Hazemessgerät charakterisiert und photographisch dokumentiert.

Ein vollständiger Russabbau tritt auf unbeschichteten Glasscheiben bei 550°C auf (Tabelle 1). Hierbei handelt es sich um eine pyrolytische Zersetzung der organischen Bestandteile. Alle in den Beispielen aufgeführten Oberflächen zeigen deutlich bessere und früherer Zersetzung des Russ gegenüber der unbeschichteten Referenz und Vergleichsbeispielen mit Übergangsmetallen.

**Tabelle 1. Charakteristik der Beschichtungen - Russabbau.**

| Substanz | Transparenz | Katalytische Aktivität (T/1h) | | | | | |
|---|---|---|---|---|---|---|---|
| | | 300°C | 350°C | 400°C | 450°C | 500°C | 550°C |
| Referenz Glaskeramik | | - | - | - | 0 | ++ | +++ |
| Beispiel 1 | ++ | | ++(+) | +++ | | | |
| Beispiel 2 | - | - | ++ | +++ | | | |
| Beispiel 3 | ++ | - | - | ++ (+) | +++ | | |
| Beispiel 4 | ++1) | 0 | ++ | +++ | | | |
| Beispiel 5 | + | - | ++ | +++ | | | |
| Beispiel 6 | + | - | ++ | +++ | | | |
| Beispiel 7 | Siehe Beispiel 1 | 0 | +++ | | | | |
| Beispiel 8 | n.b. | 0 | +++ | | | | |
| Vergleichsbeispiel 1 | + | - | - | - | +++ | | |
| Vergleichsbeispiel 2 | + | - | - | - | ++(+) | +++ | |

| | | | | | | | |
|---|---|---|---|---|---|---|---|
| 1) Die Bewertung der Transparenz erfolgte auf Glassubstraten Legende: +++ vollständiger Abbau ++(+) fast vollständiger Abbau ++ deutlich sichtbarer Abbau + sichtbarer Abbau 0 leichte Veränderung - keine Veränderung n.b. nicht bestimmbar | | | | | | | |

Zur Untersuchung der katalytischen Aktivität gegenüber Lebensmitteln wurde auf die beschichteten Substrate 1 Tropfen Öl aufgetropft und anschließend im Backofen bei Ober- und Unterhitze 30min bei 230°C eingebrannt bzw. verkokt. Die Prüfung der Reinigungswirkung erfolgt anschließend durch Temperungen der Proben 1 h bzw. 2h im Ofen bei 300°C, 400°C und 500°C und anschließender visueller Beurteilung.

Der Test (Tabelle 2) zeigt signifikante Vorteile gegenüber der unbeschichteten Referenz. Eine deutliche Reinigung ist schon nach 400°C/1h zu erkennen, nach 2h sind die Proben sauber. Die erfindungsgemäße Beschichtung ermöglicht es somit beispielsweise die Temperaturen von Pyrolyseöfen um 100°C zu senken, um die bisherigen Reinigungswirkungen zu erhalten. In dieser Anwendung könnte damit ein erheblicher Anteil an Energie eingespart werden.

Eine weitere Möglichkeit die katalytische Wirkung zu bestimmen ist die Umsetzung von CO zu CO_{2.} Hierzu wurde 125mg, mit der Beschichtungslösung Beispiel 1, beschichtetes Glaspulver mit einem Eduktstrom von 1 % CO und 0,5 % O₂ in Helium mit einer Gasstromgeschwindigkeit im Edukt von 183,3ml/min durchströmt. Die Temperatur des Probenraums wurde dabei sukzessive auf 500 °C erhöht. Während der Messung wurde im Gasausgangsstrom die CO₂-Konzentration gemessen und als Maß für die prozentuale Umsetzung des CO ausgewertet. Es zeigte sich, dass die light-off-Temperatur, bei der 50% des CO in CO₂ umgesetzt war, bei 300°C lag.

**Tabelle 2. Charakteristik der Beschichtung - Ölabbau (verkokt).**

| Substanz | Transparenz | Katalytische Aktivität | | | |
|---|---|---|---|---|---|
| | | 400°C/1h | 400°C/2h | 500°C/1h | 500°C/2h |
| Referenz Borofloat | | - | - | ++ | +++ |
| Beispiel 1 | ++ | ++ | +++ | | |
| Beispiel 3 | ++ | ++ | +++ | | |

## Patentansprüche

1. Thermokatalytische Beschichtung,
**dadurch gekennzeichnet,**
**dass** die Beschichtung zumindest eine Lithiumverbindung in einer Menge enthält, die ≥ 2 Gew.-% an Lithiumionen, bezogen auf das Gesamtgewicht der Beschichtung entspricht.

2. Thermokatalytische Beschichtung nach Anspruch 1,
**dadurch gekennzeichnet,**
**dass** die ausgewählte Lithiumverbindung einen pH-Wert ≤11 aufweist und bevorzugt aus der Gruppe der anorganischen Lithiumsalze, wie beispielsweise Lithiumphosphat, Lithiumnitrat, Lithiumhalogenide und Lithiumsulfat, organischen Lithium enthaltenden Verbindungen, wie beispielsweise Lithiumacetat, Lithiumcitrattetrahydrat, Lithiumpropionat und Lithium-Derivate der Carbonsäuren ausgewählt ist.

3. Thermokatalytische Beschichtung nach einem der vorherigen Ansprüche,
**dadurch gekennzeichnet,**
**dass** die Beschichtung ein Matrixmaterial aufweist in das die Lithiumverbindung eingebracht ist.

4. Thermokatalytische Beschichtung nach einem der vorherigen Ansprüche,
**dadurch gekennzeichnet,**
**dass** das Matrixmaterial zumindest ein anorganisches Material enthält, das aus der Gruppe der Gläser und Glaslote, Sol-Gel-Matrices ausgewählt ist, die bevorzugt Siliziumoxid, Titanoxid, Zirkonoxid, Aluminiumoxid, Ceroxid, Eisenoxid, Zinnoxid, boroxidisches Material umfassen.

5. Thermokatalytische Beschichtung nach einem der Ansprüche 1 bis 54
**dadurch gekennzeichnet,**
**dass** das Matrixmaterial zumindest eine organisch basierte Verbindung enthält, die aus der Gruppe der Wachse, Polymere, Tenside, Carbon- und Fettsäuren, Öle, Harze, Silikonharze, oder Mischungen daraus ausgewählt ist.

6. Thermokatalytische Beschichtung nach einem der Ansprüche 1 bis 5,
**dadurch gekennzeichnet,**
**dass** die Beschichtung in Form einer Paste oder Flüssigkeit vorliegt, die ein Verdickungsmittel bevorzugt aus der Gruppe aus Xanthangum, Glycerin, Polyethylenglycol, Polyvinylalkohol, Polyvinylpyrrolidon, sowie Cellulose und den Cellulosederivaten und Mischungen davon enthält.

7. Thermokatalytische Beschichtung nach einem der vorherigen Ansprüche,
**dadurch gekennzeichnet,**
**dass** in der Beschichtung Partikel, bevorzugt Nanopartikel enthalten sind.

8. Thermokatalytische Beschichtung nach einem der Ansprüche 1 bis 7,
**dadurch gekennzeichnet,**
**dass** die Beschichtung eine Dicke von 1 nm bis 10µm, bevorzugt von 5nm bis 350nm und besonders bevorzugt von 10nm bis 300nm aufweist.

9. Thermokatalytische Beschichtung nach einem der Ansprüche 1 bis 8,
**dadurch gekennzeichnet,**
**dass** die Beschichtung farblos und/oder transparent ist.

10. Substrat mit einer thermokatalytisch wirksamen Beschichtung, nach mindestens einem der Ansprüche 2 bis 9,
**dadurch gekennzeichnet,**
**dass** die Beschichtung zumindest teilweise eine Lithiumverbindung in einer Menge enthält, die ≥ 2 Gew.-% an Lithiumionen bezogen auf das Gesamtgewicht der Beschichtung entspricht.

11. Substrat nach Anspruch 10,
**dadurch gekennzeichnet,**
**dass** das Substrat aus einem Material besteht, das ausgewählt ist aus der Gruppe Glas, Glaskeramik, Sinterglas, Sinterglaskeramik, Sinterkeramik, Keramik, Metall, Kunststoffe und Emaille.

12. Substrat nach den Ansprüchen 10 und 11,
**dadurch gekennzeichnet,**
**dass** das Substrat aus planaren Flächen oder dreidimensionalen Formkörpern oder aus Partikeln besteht.

13. Substrat nach einem der Ansprüche 10 bis 12,
**dadurch gekennzeichnet,**
**dass** zwischen dem Substrat und der Beschichtung eine Barriereschicht angeordnet ist.

14. Substrat nach einem der Ansprüche 10 bis 13,
**dadurch gekennzeichnet,**
**dass** an dem Substrat eine IR-Strahlung reflektierende Schicht angeordnet ist.

15. Substrat nach einem der Ansprüche 10 bis 14,
**dadurch gekennzeichnet,**
**dass** das Substrat und die Beschichtungen farblos und/oder transparent sind.

16. Verfahren zur Herstellung eines thermokatalytisch beschichteten Substrats nach einem der Ansprüche 1 bis 15, durch Bereitstellen einer flüssigen bis viskosen Beschichtung, Aufbringen der Beschichtung auf ein Substrat und Trocknen des beschichteten Substrats.

17. Verfahren nach Anspruch 16,
**dadurch gekennzeichnet,**
**dass** das Trocknen bei einer Temperatur von 20°C bis 750°C, vorzugsweise 20°C bis 500°C und besonders bevorzugt 20°C bis 450°C erfolgt.

18. Verwendung eines beschichteten Substrates und nach mindestens einem der Ansprüche 10 bis 17 als Bauteile in oder an Kaminen und Kaminöfen, Kamininnenraumverkleidungen, Verkleidung des Kaminabgasrohrs, Filter für Kamine;
Bauteile in oder an Heizanlagen, Verkleidung des Abgasrohrs, Filter für Abgasrohr; Bauteile in oder an Koch-, Brat-, Back und Grillvorrichtungen, Sichtscheiben, Innenraumverkleidungen, Verkleidung des Abluftrohrs, Filter für Abluftrohr, Friteusen, Mikrowellen, Backbleche, -formen, Backgitter, Grillspieße, industrielle Backautomaten, usw.;
Bauteile an Dunstabzugshauben;
Bauteile an Solaranlagen;
Bauteile an Reaktoren;
Bauteile an oder in Verbrennungsanlagen;
Bauteile an oder in Verbrennungsmotoren, insbesondere im Abgasstrang, Autoabgaskatalysator, Dieselrußfilter.
